Europäisches Patentamt

European Patent Office

Office européen des brevets

(19)

(11) Veröffentlichungsnummer: **0 069 166**
**B1**

(12) **EUROPÄISCHE PATENTSCHRIFT**

(45) Veröffentlichungstag der Patentschrift:
20.03.85

(21) Anmeldenummer: 81105292.7

(22) Anmeldetag: 08.07.81

(51) Int. Cl.⁴: **H 04 N 9/67**

(54) Integrierte Interfaceschaltung zwischen der RGB-Matrix und den Video-Endstufen von Farbfernsehgeräten.

(43) Veröffentlichungstag der Anmeldung:
12.01.83 Patentblatt 83/2

(45) Bekanntmachung des Hinweises auf die Patenterteilung:
20.03.85 Patentblatt 85/12

(84) Benannte Vertragsstaaten:
DE FR GB IT NL

(56) Entgegenhaltungen:
DE - A - 2 947 212
US - A - 3 701 843
US - A - 4 167 751

(73) Patentinhaber: Deutsche ITT Industries GmbH,
Hans-Bunte-Strasse 19 Postfach 840, D-7800 Freiburg
(DE)

(84) Benannte Vertragsstaaten: DE

(73) Patentinhaber: ITT INDUSTRIES INC., 320 Park Avenue,
New York, NY 10022 (US)

(84) Benannte Vertragsstaaten: FR GB IT NL

(72) Erfinder: Freyberger, Laurin Clemens, Dipl.-Ing., Unter
Stad 3, D-7836 Bahlingen (DE)
Erfinder: Novotny, Bernd, Ing. grad., Belchenstrasse 12,
D-7803 Gundelfingen (DE)

(74) Vertreter: Stutzer, Gerhard, Dr., Deutsche ITT Industries
GmbH Patent- und Lizenzabteilung
Hans-Bunte-Strasse 19 Postfach 840, D-7800 Freiburg
(DE)

**Beschreibung**

Die Erfindung betrifft eine integrierte Interfaceschaltung mit je einem Operationsverstärker zwischen den Ausgängen der Ausgangsverstärker der RGB-Matrix und den Eingängen der die Bildröhre von Farbfernsehgeräten ansteuernden Video-Endstufe mit Teilschaltungen zur Helligkeitseinstellung, Dunkeltastung, Externsignal-Einblendung sowie Weisswert- und Dunkelspannungsabgleich, entsprechend dem Oberbegriff des Anspruchs 1. Derartige Interfaceschaltungen sind beispielsweise aus der Druckschrift «Valvo-Entwicklungsmitteilungen», Nr. 77, Dezember 1979 («Vollständiger PAL-Decoder mit der integrierten Schaltung TDA 3560») bekannt, vgl. dort insbesondere die Seiten 8 bis 12 und 18 bis 20.

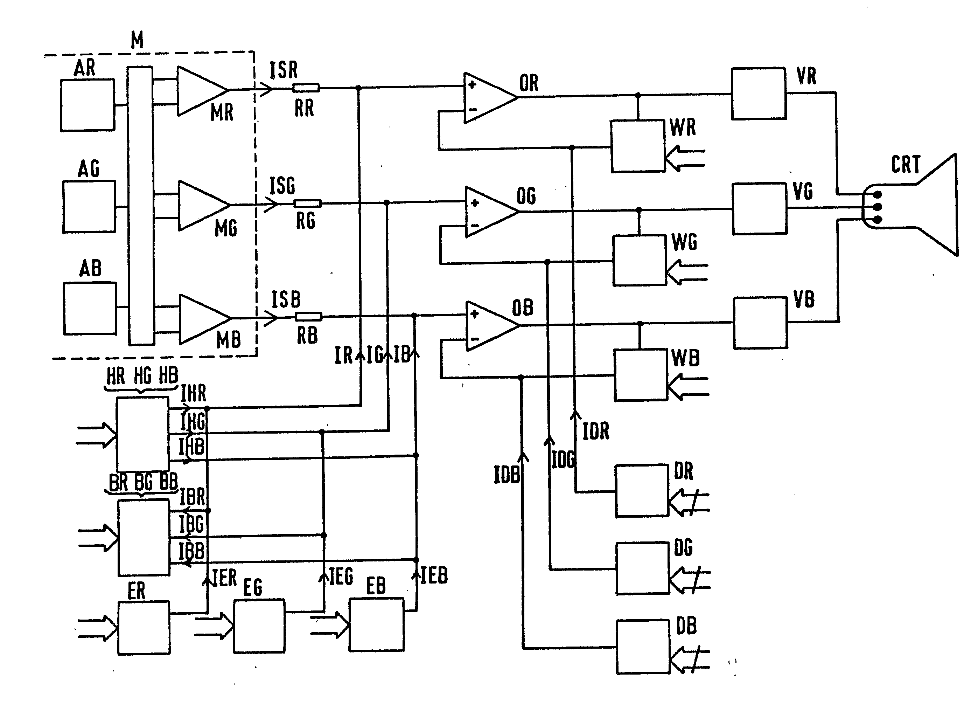

Bei der bekannten Anordnung wird die Externsignal-Einblendung über einen Kondensator vorgenommen, so dass der Gleichspannungspegel der eingeblendeten Signale durch Klemmung auf den Schwarzwert der aus der RGB-Matrix stammenden Signale wiedergewonnen werden muss, vgl. Bild 9 und Text auf Seite 11. Ferner erfolgt nach Bild 10 auf Seite 12 bei der bekannten Anordnung die Helligkeitseinstellung zwar in üblicher Weise mittels eines Potentiometers, dieses steuert jedoch einen eigenen Operationsverstärker, dessen Ausgang getastet auf den Eingang des zwischen dem RGB-Matrix-Ausgang und dem Endstufeneingang liegenden Operationsverstärkers einwirkt, der einen konstanten Verstärkungsfaktor hat und dessen Ausgang erst über eine Begrenzerstufe mit nachgeschalteter Ausgangsstufe die Video-Endstufen ansteuert. Schliesslich erfolgt nach Bild 15 auf Seite 19 der Dunkelspannungs- und der Weisswertabgleich am Eingang der Video-Endstufen mittels zweier Trimm-Potentiometer, von denen das eine parallel zum Basis-Emitterkreis des unteren Endtransistors und das andere zwischen den Ausgang der erwähnten Ausgangsstufe und dem Eingang dieses Endtransistors liegt.

Es ist offensichtlich, dass bei einer derartigen Ausführung des Dunkelspannungs- und Weisswertabgleichs beide sich gegenseitig beeinflussen, so dass der Hersteller nur iterativ durch abwechselndes Einstellen des entsprechenden Trimm-Potentiometers den Abgleich vornehmen kann. Ferner ist bei der bekannten Anordnung durch die gewählte Art der Externsignal-Einblendung sowie durch die Art der Helligkeitseinstellung ein Schaltungsaufwand bedingt, der bei umfangreichen zu integrierenden Schaltungen stören kann.

Hier will die in den Ansprüchen gekennzeichnete Erfindung Abhilfe schaffen; sie löst daher die Aufgabe, eine Interfaceschaltung der angegebenen Art so zu vereinfachen, dass mit weniger Schaltungsaufwand die an sie zu stellenden Funktionsanforderungen erzielt werden; darüberhinaus soll insbesondere der Dunkelspannungsabgleich und der Weisswertabgleich ohne gegenseitige Beeinflussung vorgenommen werden können.

Der wesentliche Vorteil der Erfindung ergibt sich unmittelbar aus der Aufgabenlösung; ein weiterer Vorteil besteht darin, dass durch die gewählte ausschliessliche Steuerung mittels Strömen die Anordnung ohne weiteres dafür geeignet ist, in mit digitaler Signalverarbeitung ausgestatteten Farbfernsehgeräten, z.B. entsprechend der Offenlegungsschrift DE-A1-28 54 236, eingesetzt zu werden.

Die Erfindung wird nun anhand der Figur der Zeichnung näher erläutert.

Diese zeigt teilweise schematisch in Form eines Blockschaltbilds die Schaltung eines Ausführungsbeispiels der Erfindung. Die RGB-Matrix M hat für jeden Farbkanal einen Ausgangsverstärker, also die drei Ausgangsverstärker MR, MG, MB, wobei die zweiten Buchstaben in den Bezugzeichen — auch in den folgenden Bezugzeichen für die anderen noch zu beschreibenden Teilschaltungen — die verarbeitete Farbart angibt; so steht R für rot, G für Grün und B für blau. Entsprechend der Erfindung sind die Ausgangsverstärker MR, MG, MB so dimensioniert, dass sie einen niederen Ausgangswiderstand aufweisen, was z.B. dadurch erreicht werden kann, dass sie Emitterfolger- bzw. Sourcefolger-Ausgangsstufen aufweisen.

Der Ausgang der jeweiligen Ausgangsverstärker MR, MG, MB liegt über den niederohmigen Widerstand RR, RG, RB am nichtinvertierenden Eingang des Operationsverstärkers OR, OG, OB, dessen Ausgang direkt mit dem Eingang der Video-Endstufe VR, VG, VB verbunden ist, deren Ausgang mit der Kathode der Farbbildröhre CRT verbunden ist. Zwischen dem Ausgang der Operationsverstärker OR, OG, OB und deren invertierendem Eingang ist für den Weissabgleich das gegenkoppelnde, vorzugsweise digital, einstellbare Widerstandsnetzwerk WR, WG, WB angeordnet. Dem invertierenden Eingang der Operationsverstärker OR, OG, OB sind ferner entsprechende Dunkel-Einstellströme, IDR, IDG, IDB zugeführt. In der Figur der Zeichnung stammen diese von den Digital-Analog-Stromwandlern DR, DG, DB, die entsprechende Digitalsignale in die Einstellströme wandeln.

Diese Digitalsignale stammen beispielsweise aus einer laufenden Stahlstrommessung der Farbbildröhre CRT, was jedoch nicht Gegenstand der Erfindung ist.

Durch diese Anordnung des Weiss- und Dunkelspannungsabgleichs wird erreicht, dass beide Einstellungen unabhängig voneinander vorgenommen werden können, da sie sich gegenseitig nicht beeinflussen.

Zur Helligkeitseinstellung sind dem nichtinvertierenden Eingang der Operationsverstärker OR, OG, OB entsprechende Helligkeits-Einstellströme IHR, IHG, IHB zugeführt, also dem Verbindungspunkt der niederohmigen Widerstände RR, RG, RB mit dem entsprechenden nichtinvertierenden Eingang.

In gleicher Weise werden diesen nichtinvertierenden Eingängen der Operationsverstärker OR, OG, OB Externsignal-Ströme IER, IEG, IEB zugeführt. Somit fliessen über den jeweiligen niederohmigen Widerstand RR, RG, RB und den niederohmigen Ausgangswiderstand der Matrix-Ausgangsverstärker MR, MG, MB zusätzlich zu den Video-Signal-Strömen IS die Gesamt-Ströme IR, IG, IB. Zur Dunkeltastung wird diese Stromsumme des jeweiligen R-, G- und B-Kanals für die Zeit der Dunkeltastung von der Dunkelschaltung BR, BG, BB aufgenommen, so dass die Operationsverstärker OR, OG, OB kein Eingangssignal erhalten und als Ausgangssignal die durch die Dunkelspannungseinstellung vorgegebene Dunkelspannung abgeben. Aufgrund der linearen Überlagerung der einzelnen Ströme mittels der genannten Widerstände beeinflussen sich die einzelnen Ströme gegenseitig nicht, so dass bei der Erfindung keine besonderen Massnahmen zur «Entflechtung» der Funktionen Helligkeitseinstellung, Dunkeltastung und Externsignal-Einblendung erforderlich sind.

Im Ausführungsbeispiel der Figur der Zeichnung erfolgt die Helligkeitseinstellung wiederum mit entsprechenden Digital-Analog-Stromwandlern HR, HG, HB, die entsprechende Digitalsignale in die Einstellströme IHR, IHG, IHB umwandeln, vgl. die genannte Offenlegungsschrift DE-A1-28 54 236. In den Dunkeltastschaltungen BR, BG, BB wird ein üblicherweise als Dunkeltast-Spannung vorliegendes Signal zum Schalten von Transistorschaltern benutzt, die die Dunkeltastströme IBR, IBG, IBB aufnehmen. Ein Externsignal muss in den entsprechenden Wandlerstufen ER, EG, EB in die entsprechenden Fremdsignal-Ströme IER, IEG, IEB umgewandelt werden. Bei diesem Fremdsignal kann es sich beispielsweise um ein Signal nach dem Bildschirmtext-System oder nach vergleichbaren Systemen handeln. Es ist jedoch auch möglich, an dieser Stelle andere Einblend-Signale einzuspeisen, wie z.B. Kanalnummern-Anzeige oder Bild-im-Bild-Signale.

Die Ansteuerung der RGB-Matrix M erfolgt im Ausführungsbeispiel der Figur ebenfalls durch Digital-Analog-Wandler AB, AR, AY, die digitale B-Y-, R-Y- und Y-Signale in die entsprechenden Analog-Signale wandeln. Diese digitalen Signale treten ebenfalls bei digitaler Signalverarbeitung auf, vgl. die erwähnte DE-A1-28 54 236. Es handelt sich dabei um das digitale Blau-Farbdifferenz-(B-Y), das Rot-Farbdifferenz-(R-Y) und das Leuchtdichte-Signal (Y).

Wenn keine digitale Signalverarbeitung innerhalb des Farbfernsehempfängers, sondern die übliche analoge Aufbereitung der einzelnen Signale vorgesehen ist, so ist die RGB-Matrix M mit den üblichen analogen Signalen anzusteuern, und es sind auch die Einstellströme in bekannter Weise durch Spannungs-Strom-Wandlerstufen aus den entsprechenden analogen Signalen zu gewinnen. Die Erfindung ist somit sowohl bei Farbfernsehempfängern mit digitaler als auch mit analoger Signalverarbeitung anwendbar.

Üblicherweise werden bei digitaler Signalaufbereitung die einzelnen Teilschaltungen der integrierten Schaltungen mittels Isolierschicht-Feldeffekttransistoren, also in der sogenannten MOS-Technik, realisiert. Die Erfindung kann vorzugsweise, insbesondere bei analoger Signalaufbereitung im Fernsehempfänger, in 3D-Bipolartechnik realisiert werden, d.h. in dreifach-diffundierter Technik.

## Patentansprüche

1. Integrierte Interfaceschaltung mit je einem Operationsverstärker (OR, OG, OB) zwischen den Ausgängen der Ausgangsverstärker (MR, MG, MB) der RGB-Matrix (M) und den Eingängen der die Bildröhre (CRT) von Farbfernsehgeräten ansteuernden Video-Endstufen (VR, VG, VB) mit Teilschaltungen zur Helligkeitseinstellung, Dunkeltastung, Externsignal-Einblendung sowie zum Weisswert- und Dunkelspannungsabgleich, gekennzeichnet durch folgende Merkmale:

— die Matrix-Ausgangsverstärker (MR, MG, MB) haben einen niedrigen Ausgangswiderstand (z.B. durch Emitter- oder Sourcefolger-Ausgangsstufen),

— zwischen den Ausgang des jeweiligen Matrix-Ausgangsverstärkers (MR, MG, MB) und den zugehörigen nichtinvertierenden Eingang des Operationsverstärkers (OR, OG, OB) ist ein niederohmiger Widerstand (RR, RG, RB) geschaltet,

— der Weissabgleich erfolgt durch ein zwischen dem invertierenden Eingang und dem Ausgang des jeweiligen Operationsverstärkers (O..) liegendes einstellbares Widerstandsnetzwerk (WR, WG, WB),

— der Dunkelspannungsabgleich erfolgt durch jeweils einen dem invertierenden Eingang des entsprechenden Operationsverstärkers (O..) zugeführten Dunkel-Einstellstrom (IDR, IDG, IDB), und

— die Helligkeitseinstellung, die Externsignal-Einblendung bzw. die Dunkeltastung erfolgen durch entsprechende, dem jeweiligen nichtinvertierenden Eingang des Operationsverstärker (O..) zusätzlich zum Video-Signalstrom (IS..) zugeführte Helligkeits-, Einblend- bzw. Dunkeltast-Einstellströme (IHR, IHG, IHB; IER, IEG, IEB; IBR, IBG, IBB).

2. Interfaceschaltung nach Anspruch 1, dadurch gekennzeichnet, dass die Dunkel- bzw. Helligkeits-Einstellströme (IDR, IDG, IDB; IHR, IHG, IHB) aus Digitalsignalen mittels Digital-Analog-Stromwandlern (DR, DG, DB; HR, HG, HB) erzeugt sind, und die Externsignal-Ströme (IE..) mittels Analog-Spannungs-Strom-Wandlern (ER, EG, EB) erzeugt sind.

3. Interfaceschaltung nach Anspruch 1 oder 2, dadurch gekennzeichnet, dass das jeweilige Widerstandsnetzwerk (WR, WG, WB) mit einem digitalen Einstellsignal angesteuert ist.

4. Interfaceschaltung nach einem der Ansprüche 1 bis 3, dadurch gekennzeichnet, dass die Eingangssignale der RGB-Matrix (M) von mit digitalen (R-Y)-, (B-Y)- und Y-Signalen angesteuerten Digital-Analog-Wandlern (AB, AR, AY) erzeugt sind.

## Claims

1. Integrated interface circuit comprising an operational amplifier (OR, OG, OB) between the output of each output amplifier (MR, MG, MB) of the RGB matrix (M) and the input of each video output stage (VR, VG, VB) driving the picture tube (CRT) of a colour-television set, and subcircuits for brightness adjustment, blanking, external-signal gating, white level adjustment, and blanking-voltage adjustment, characterized by the following features:

— the matrix output amplifiers (MR, MG, MB) have a low output resistance (e.g., through emitter- or source-follower output stages);

— a low-value resistor (RR, RG, RB) is inserted between the output of the respective matrix output amplifier (MR, MG, MB) and the noninverting input of the associated operational amplifier (OR, OG, OB);

— the white-level adjustment is made by an adjustable resistance network (WR, WG, WB) between the inverting input and the output of the respective operational amplifier (O..);

— the blanking-voltage adjustment is made by means of a blanking-voltage control current (IDR, IDG, IDB) applied to the inverting input of the respective operational amplifier (O..), and

— the brightness adjustment; the external-signal gating, and the blanking are performed, respectively, by means of brightness-, gating-, and blanking-control currents (IHR, IHG, IHB; IER, IEG, IEB; IBR, IBG, IBB) applied to the noninverting input of the respective operational amplifier (O..) in addition to the video-signal current (IS..).

2. An interface circuit as claimed in claim 1, characterized in that the blanking-voltage and brightness control currents (IDR, IDG, IDB; IHR, IHG, IHB) are derived from digital signals by means of digital-to-analog-current converters (DR, DG, DB; HR, HG, HB), and that the external-signal currents (IE..) are generated by means of analog-voltage-to-current converters (ER, EG, EB).

3. An interface circuit as claimed in claim 1 or 2, characterized in that the respective resistance network (WR, WG, WB) is controlled with a digital control signal.

4. An interface circuit as claimed in any one of claims 1 to 3, characterized in that the input signals of the RGB matrix (M) are provided by digital-to-analog converters (AR, AB, AY) controlled with digital R-Y, B-Y, and Y signals.

## Revendications

1. Circuit intégré d'interface comportant: un amplificateur opérationnel (OR, OG, OB) entre chacune des sorties des amplificateurs de sortie (MR, MG, MB) de la matrice RVB (M) et chacune des entrées des étages de sortie vidéo (VR, VG, VB) commandant le tube-image (CRT) d'un récepteur de télévision en couleurs; des circuits élémentaires pour le réglage de luminosité, la commande de suppression et l'injection de signaux extérieurs, ainsi que pour l'ajustement du niveau du blanc et de la tension de suppression; caractérisé par les particularités suivantes:

— les amplificateurs (MR, MG, MB) de sortie de la matrice ont une faible résistance de sortie (par exemple grâce à des égages de sortie du type émetteur-suiveur ou source-suiveuse),

— une résistance de faible valeur (RR, RG, RB) est connectée entre chaque sortie d'un amplificateur de sortie (MR, MG, MB) de la matrice et l'entrée non-inverseuse de l'amplificateur opérationnel correspondant (OR, OG, OB),

— l'ajustement du niveau du blanc s'effectue par un réseau de résistance réglable (WR, WG, WB) placé entre l'entrée inverseuse et la sortie de chaque amplificateur opérationnel (O..),

— l'ajustement de tension de suppression s'effectue par un courant de réglage de suppression (IDR, IDG, IDB) amené à l'entrée inverseuse de l'amplificateur opérationnel correspondant (O..), et

— le réglage de luminosité, l'injection de signal extérieur superposable, et/ou la commande de suppression, s'effectuent par des courants correspondants, à savoir respectivement des courants de réglage de luminosité (IHR, IHG, IHB), des courants d'injection (IER, IEG, IEB) et des courants de suppression (IBR, IBG, IBB), qui sont amenés chacun à l'entrée non-inverseuse de l'amplificateur opérationnel correspondant (O..), en plus du courant de signal vidéo (IS..).

2. Circuit d'interface selon la revendication 1, caractérisé en ce que les courants de suppression et/ou de luminosité (IDR, IDG, IDB; IHR, IHG, IHB) sont produits, à partir de signaux numériques, au moyen de convertisseurs numériques-analogiques (DR, DG, DB; HR, HG, HB), et les courants de signal extérieur (IE..) sont produits au moyen de convertisseurs analogiques tension-courant (ER, EG, EB).

3. Circuit selon la revendication 1 ou 2, caractérisé en ce que chaque réseau de résistance (WR, WG, WB) est commandé par un signal de réglage numérique.

4. Circuit selon l'une quelconque des revendications 1 à 3, caractérisé en ce que les signaux d'entrée de la matrice RVB (M) sont produits par des convertisseurs numériques-analogiques (AB, AR, AY) commandés par les signaux numériques (R-Y), (B-Y) et Y.